# EUROPÄISCHE PATENTSCHRIFT

(11) **EP 2 921 925 B1**
(45) Veröffentlichungstag und Bekanntmachung des Hinweises auf die Patenterteilung: **06.05.2020**
(21) Anmeldenummer: 15155555.4
(22) Anmeldetag: 18.02.2015
(51) Int. Cl.: G05D 16/20

(54) **Druckreduzierventil**
Pressure reducing valve
Soupape de réduction de pression

(30) Priorität: 19.03.2014 DE 102014205041
(43) Veröffentlichungstag der Anmeldung: 23.09.2015
(73) Patentinhaber: Robert Bosch GmbH, 70442 Stuttgart (DE)
(72) Erfinder: Zaiser, Liebhart, 97753 Karlstadt (DE); Pastuschka, Juergen, 97753 Karlstadt (DE)
(74) Vertreter: Maiß, Harald

(56) Entgegenhaltungen:
- DE-A1- 19 624 884
- US-A- 4 785 849
- US-A1- 2001 025 662

## Beschreibung

Die Erfindung betrifft ein Druckreduzierventil, insbesondere ein vorgesteuertes Druckreduzierventil, gemäß dem Oberbegriff des Anspruchs 1.

Ein Druckreduzierventil hält bei einem veränderlichen Eingangsdruck (Primärdruck) einen Ausgangsdruck (Sekundärdruck) konstant.

In der Druckschrift DE 35 37 336 A1 ist ein derartiges Druckreduzierventil offenbart. Dieses hat ein Schaltventil als Hauptstufe und ein Regelventil als Vorstufe. Mit dem Regelventil wird der Sekundärdruck bis zu einer bestimmten Druckgrenze geregelt. Übersteigt der Sekundärdruck die Druckgrenze, so wird ein Ventilschieber des Schaltventils derart betätigt, dass ein Steuerölanschluss direkt mit einem Ausgangsanschluss verbunden ist und die Verbindung nicht mehr über das Regelventil erfolgt. Nachteilig bei dieser Lösung ist, dass das gesamte Druckreduzierventil zum Schwingen neigt. Während des Regelvorgangs in der Vorstufe werden wechselweise zwei Blenden des Regelventils geöffnet. Insbesondere das Öffnen und Schließen derjenigen Blende, die einen Öffnungsquerschnitt zwischen dem Steuerölanschluss und dem Ausgangsanschluss steuert, führt zu einer Schwingungsanregung eines Ventilschiebers des Steuerventils der Hauptstufe.

In der Druckschrift DE 195 26 601 B4 und in der Druckschrift DE 37 39 824 C2 sind weitere Druckreduzierventile offenbart.

In der Druckschrift US 4,785,849 wird ein vorgesteuertes Druckregelventil gezeigt, bei dem spezielle Kolbenformen zu einer gewissen Schwingungsreduzierung führen.

Demgegenüber liegt der Erfindung die Aufgabe zugrunde, ein Druckreduzierventil zu schaffen, dessen Neigung zum Schwingen vergleichsweise gering ist oder vermieden wird.

Diese Aufgabe wird gelöst mit einem Druckreduzierventil gemäß den Merkmalen des Anspruchs 1.

Sonstige vorteilhafte Weiterbildungen der Erfindung sind Gegenstand weiterer Unteransprüche.

Erfindungsgemäß ist ein Druckreduzierventil, insbesondere ein 3-Wege-Druckreduzierventil, vorgesehen, das ein Hauptventil (Hauptstufe) und ein Vorsteuerventil (Vorstufe) aufweist. Das Hauptventil hat ein Steuerteil (Steuerkolben), das in Abhängigkeit eines über ein Vorsteuerventil geregelten Vorsteuerdrucks einen Öffnungsquerschnitt zwischen einem Steuerölanschluss und einem Ausgangsanschluss steuert. Zum Konstanthalten des Vorsteuerdrucks hat das Vorsteuerventil ein Vorsteuerteil oder zwei zusammenwirkende Vorsteuerteile. Damit kann in einem Druckregelbetrieb des Vorsteuerventils der eingestellte Vorsteuerdruck konstant gehalten werden. Erfindungsgemäß ist mit dem Vorsteuerteil oder den Vorsteuerteilen ein erster Öffnungsquerschnitt zwischen einem weiteren Steuerölanschluss oder dem Steuerölanschluss und einem mit dem Hauptventil fluidisch verbundenen Vorsteueranschluss steuerbar. Zusätzlich ist ein zweiter Öffnungsquerschnitt mit dem Vorsteuerteil oder den Vorsteuerteilen zwischen dem Vorsteueranschluss und einem Ablaufanschluss (Tankanschluss) steuerbar. Des Weiteren können im Druckregelbetrieb beide Öffnungsquerschnitte geöffnet sein.

Diese Lösung hat den Vorteil, dass durch die Öffnung beider Öffnungsquerschnitte im Druckregelbetrieb Schwingungen deutlich reduziert oder sogar vermieden werden, da die Öffnungsquerschnitte nicht wechselweise geöffnet und geschlossen werden.

Mit Vorteil ist bei dem Vorsteuerventil außerhalb des Druckregelbetriebs, insbesondere im ausgeschalteten Zustand des Vorsteuerventils, wenigstens ein Öffnungsquerschnitt geschlossen. Dies führt vorteilhafterweise dazu, dass außerhalb des Druckregelbetriebs kein Steuerölverlust vorhanden ist.

In weiterer Ausgestaltung der Erfindung kann über den Vorsteueranschluss der Vorsteuerdruck auf das Steuerteil des Hauptventils beaufschlagbar sein.

Das Hauptventil kann einen Steuerölanschluss, einen Ausgangsanschluss und einen Tankanschluss aufweisen. Mit dem Steuerteil wird vorzugsweise entweder der Steuerölanschluss mit dem Ausgangsanschluss oder der Ausgangsanschluss mit dem Tankanschluss verbunden.

Das Steuerteil wird bevorzugterweise über eine erste Stirnfläche von einer Federkraft einer Feder und dem Druckmittel des Ausgangsanschlusses und über eine zweite Stirnfläche vom Druckmittel des Vorsteueranschlusses des Vorsteuerventils beaufschlagt. Ist das Vorsteuerventil im "ausgeschalteten" Zustand, so kann das Steuerteil über die Federkraft der Feder in eine Grundstellung verschoben werden.

Die Steuerölanschlüsse des Vorsteuerventils und des Hauptventils können fluidisch verbunden sein. Alternativ ist denkbar, beide Steuerölanschlüsse voneinander zu trennen, womit das Vorsteuerventil unabhängig vom Hauptventil mit Steueröl versorgbar ist.

In weiterer Ausgestaltung der Erfindung kann das Steuerteil des Hauptventils in einer mittleren Regelstellung, in der sich die auf die Stirnflächen des Steuerteils wirkenden Kräfte aufheben, den Ausgangsanschluss von dem Druckanschluss und dem Tankanschluss trennen.

Von der Federkraft der Feder und dem Druckmittel des Ausgangsanschlusses kann das Steuerteil des Hauptventils in Richtung von ersten Regelstellungen beaufschlagt sein. In diesen steuert es ausgehend von der mittleren Regelstellung einen Öffnungsquerschnitt zwischen dem Ausgangsanschluss und dem Tankanschluss über eine erste Blende oder eine erste Steuerkante auf. Entgegengesetzt zur Federkraft kann das Steuerteil vom Druckmittel des Vorsteueranschlusses des Vorsteuerventils und somit vom Vorsteuerdruck in Richtung von zweiten Regelstellungen beaufschlagt sein. In diesen steuert es ausgehend von der mittleren Regelstellung einen Öffnungsquerschnitt zwischen dem Ausgangsanschluss und dem Druckanschluss über eine zweite Blende oder zweite Steuerkante auf. Somit kann auf einfache Weise ein Sekundärdruck durch das Hauptventil konstant gehalten werden.

Die Stirnflächen des Steuerteils können eine gleiche Größe aufweisen.

Vorzugsweise ist das Steuerteil als Steuerkolben ausgebildet. Dieser kann in einer Schieberbohrung verschiebbar ausgebildet sein und einen ersten Steuerbund aufweisen. Dieser kann dann mit dem in der Schieberbohrung mündenden Steuerölanschluss eine erste Blende bilden. Des Weiteren kann der Steuerkolben einen zweiten Steuerbund aufweisen, der mit dem in die Schieberbohrung mündenden Tankanschluss eine zweite Blende bildet.

Der Ausgangsanschluss kann ebenfalls in die Schieberbohrung münden und zwischen dem Tankanschluss und dem Druckanschluss ausgebildet sein. Hat der Steuerkolben eine von den Steuerbünden begrenzte Aussparung (Ringaussparung), so kann über diese der Druckanschluss mit dem Ausgangsanschluss und der Ausgangsanschluss mit dem Tankanschluss fluidisch verbindbar sein.

Die Steuerbünde sind beispielsweise zwischen den Stirnflächen des Steuerkolbens vorgesehen.

Bei dem Vorsteuerventil können die zusammenwirkenden Vorsteuerteile aus einem ersten und zweiten Vorsteuerteil gebildet sein. Somit hat das Vorsteuerventil zwei Vorsteuerteile. Das erste Vorsteuerteil kann als Vorsteuerkolben mit einem Radialbund ausgebildet sein, über den der zweite Öffnungsquerschnitt steuerbar ist. Mit dem Vorsteuerkolben kann ein Sitzventilkörper als zweites Vorsteuerteil betätigbar sein, über den der erste Öffnungsquerschnitt steuerbar ist. Dies führt zu einer vorrichtungstechnisch äußerst einfachen Ausgestaltung, um zum Einen im Druckregelbetrieb beide Öffnungsquerschnitte zu öffnen und außerhalb des Druckreduzierventils einen der Öffnungsquerschnitte zu schließen.

Zum Einstellen des Vorsteuerdrucks kann der Vorsteuerkolben einfach in Richtung des Sitzventilkörpers mit einer Aktorkraft eines Aktors beaufschlagbar sein. Bei einer Verschiebung des Vorsteuerkolbens in diese Richtung wird vorzugsweise der zweite Öffnungsquerschnitt verkleinert und der erste Öffnungsquerschnitt vergrößert. In entgegengesetzter Richtung ist der Vorsteuerkolben, insbesondere über den Sitzventilkörper, mit einem Primärdruck beziehungsweise mit dem Steueröl beaufschlagbar. Wird keine Aktorkraft auf den Vorsteuerkolben aufgebracht oder ist die auf den Sitzventilkörper (zweites Vorsteuerteil) wirkende Druckkraft über das Steueröl größer als die Aktorkraft, so kann der erste Öffnungsquerschnitt geschlossen werden, beispielsweise außerhalb des Regelbetriebs, wenn der Aktor "ausgeschaltet" ist.

Der Radialbund des Vorsteuerkolbens kann ebenfalls als Sitzventilkörper ausgestaltet sein. Dieser kann in einer Grundstellung des Vorsteuerkolbens auf einem Ventilsitz anliegen und den zweiten Öffnungsquerschnitt verschließen. Hierbei ist vorzugsweise der zweite Öffnungsquerschnitt geöffnet.

Der Vorsteuerkolben kann über eine vom zweiten Vorsteuerteil weg weisenden Funktionsfläche (Stirnfläche) aufweisen, über die er von der Aktorkraft beaufschlagbar ist. Über eine weitere Funktionsfläche, die zum zweiten Vorsteuerteil weist, kann er an diesem, um dieses zu verschieben, angreifen.

Vorrichtungstechnisch einfach kann der Sitzventilkörper des zweiten Vorsteuerventils als Kugelventilkörper ausgebildet sein. Dieser ist, wie vorstehend bereits erläutert, entgegen der Aktorkraft vom Steueröl (Primärdruck) beaufschlagbar. Ab einem bestimmten Verschiebeweg des Vorsteuerkolbens in eine Richtung weg vom Sitzventilkörper liegt der Sitzventilkörper auf einem Ventilsitz an und verschließt den ersten Öffnungsquerschnitt.

Als Aktor ist vorzugsweise ein Hubmagnet, insbesondere ein Proportionalmagnet, vorgesehen, über den die Aktorkraft einstellbar ist.

Im unbestromten oder "ausgeschalteten" Zustand des Aktors kann der zweite Öffnungsquerschnitt vorzugsweise geschlossen sein, womit der Radialbund als Sitzventilkörper in dieser Grundstellung auf seinem Ventilsitz aufliegt. Dies kann dadurch erreicht werden, dass der Sitzventilkörper mit einer Federkraft einer Feder beaufschlagt ist. Übersteigen allerdings die an das zweite Vorsteuerteil wirkenden Kräfte die Federkraft, so wird der erste Öffnungsquerschnitt durch das zweite Vorsteuerteil geschlossen und der zweite Öffnungsquerschnitt ist offen.

Ab einer bestimmten Bestromung des Aktors, insbesondere bei einer Maximalbestromung, kann der Sitzventilkörper des ersten Vorsteuerteils auf seinem Ventilsitz anliegen und den zweiten Öffnungsquerschnitt verschließen, während der erste Öffnungsquerschnitt geöffnet ist. Somit kann in einer jeweiligen Endstellung des Vorsteuerkolbens einer der Öffnungsquerschnitte geschlossen sein. Dies führt weiter dazu, dass Steueröl, wenn es nicht benötigt wird und eine Verlustleistung dartstellt, durch die durchflussoptimierten Endstellungen minimiert oder ganz eliminiert wird.

Der Vorsteuerkolben kann in Richtung des zweiten Vorsteuerteils, wie vorstehend bereits erläutert, von einer Federkraft einer Feder des Hubmagneten beaufschlagt sein. Eine steigende Bestromung des Hubmagneten kann zu einer Erhöhung der Aktorkraft führen, und bei einer sinkenden Bestromung des Hubmagnetes kann sich die Aktorkraft verringern.

Im Folgenden wird eine bevorzugte Ausführungsform der Erfindung anhand von Zeichnungen näher erläutert. Es zeigen:
Fig. 1 in einem schematischen Längsschnitt ein erfindungsgemäßes Druckreduzierventil gemäß einem Ausführungsbeispiel und
Fig. 2 eine Druck-Strom-Kennlinie des Druckreduzierventils aus Fig. 1.

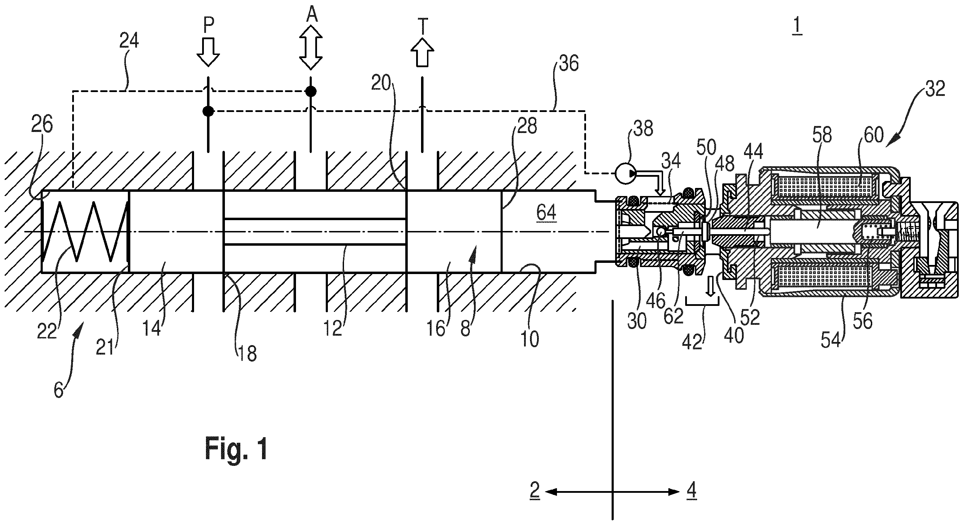

Gemäß Fig. 1 ist ein Druckreduzierventil 1 dargestellt. Hierbei handelt es sich um ein vorgesteuertes 3-Wege-Druckreduzierventil. Dieses wird beispielsweise bei Lastschaltgetrieben von PKW's, LKW's, Bussen, Baumaschinen oder Traktoren, eingesetzt. Ferner ist es für eine Vielzahl sonstiger Hydraulikanwendungen geeignet, beispielsweise zur Ansteuerung von vergleichsweise großen Wegeventilen, Fremdkraftbremsen, Lüfterantriebe, Hydropumpen oder Hydromotoren. Das Druckreduzierventil hat eine geringe Schwingungsanfälligkeit und weist geringe Steuerölverluste auf. Es ist für hohe Drücke und hohe Druckmittelvolumenströme einsetzbar.

Das Druckreduzierventil 1 hat eine Hauptstufe 2 und eine Vorstufe 4. die Hauptstufe 2 weist ein Hauptventil 6 auf. Über ein Steuerteil in Form eines Steuerkolbens 8 ist eine Druckmittelverbindung zwischen einem Steuerölanschluss P und einem Ausgangsanschluss A und zwischen dem Ausgangsanschluss A und einem Tankanschluss T steuerbar. Der Ausgangsanschluss A ist hierbei in Regelstellungen wechselweise entweder mit dem Steuerölanschluss P oder dem Tankanschluss T verbunden, oder alle Anschlüsse P, A und T sind voneinander getrennt. Die Anschlüsse P, A und T münden jeweils in einer Kolbenbohrung 10 (Schieberbohrung) in Axialrichtung gesehen hintereinander.

Der Steuerkolben 8 ist mittig radial zurückgestuft und weist hierdurch eine Ringnut 12 auf. Hierdurch sind ein erster Radialbund 14 (Steuerbund) und ein zweiter Radialbund 16 (Steuerbund) gebildet. Am ersten Radialbund 14 ist eine Steuerkante 18 vorgesehen, die zusammen mit dem in die Kolbenbohrung 10 einmündenden Steuerölanschluss P eine erste Blende bildet. Der zweite Radialbund 16 weist eine Steuerkante 20 auf, die zusammen mit dem in die Kolbenbohrung 10 einmündenden Tankanschluss T eine zweite Blende bildet. In der in Fig. 1 gezeigten mittigen Regelstellung ist der Ausgangsanschluss A sowohl von dem Steuerölanschluss P als auch von dem Ausgangsanschluss A getrennt. Über eine erste Stirnfläche 21 ist der Steuerkolben 8 von einer Federkraft einer Feder 22 in Richtung einer Aufsteuerung eines Öffnungsquerschnitts zwischen dem Ausgangsanschluss A und dem Tankanschluss T beaufschlagt. Zusätzlich ist der Steuerkolben 8 in diese Richtung von einem Druckmittel des Ausgangsanschlusses A beaufschlagt, das vom Ausgangsanschluss A über einen Steuerkanal 24 abgezweigt wird und einem Federraum 26 zugeführt ist, der von der Stirnfläche 21 begrenzt ist. Die von der Stirnfläche 21 weg weisende Stirnfläche 28 des Steuerkolbens 8 ist vom Druckmittel eines Vorsteueranschlusses 30 eines Vorsteuerventils 32 der Vorstufe 4 beaufschlagbar. Somit kann auf den Steuerkolben 8 über die Stirnfläche 28 ein Vorsteuerdruck entgegengesetzt der Federkraft der Feder 22 und entgegengesetzt des Druckmittels vom Ausgangsanschluss A wirken. Bei einer Verschiebung des Steuerkolbens in diese Richtung ausgehend von der in Fig. 1 gezeigten Regelstellung wird ein Öffnungsquerschnitt zwischen dem Steuerölanschluss P und dem Ausgangsanschluss A aufgesteuert.

Das Vorsteuerventil 32 weist ebenfalls einen Steuerölanschluss 34 auf. Dieser ist über einen Verbindungsströmungspfad 36 mit dem Steuerölanschluss P verbunden. In dem Verbindungsströmungspfad 36 kann zusätzlich eine Hydropumpe 38 vorgesehen sein. Des Weiteren hat das Vorsteuerventil 32 einen Ablaufanschluss 40, der mit einem Tank 42 verbunden ist. Das Vorsteuerventil 32 weist zwei zusammenwirkende Vorsteuerteile 44 und 46 auf. Bei dem Vorsteuerteil 44 handelt es sich um einen Vorsteuerkolben 44 mit einem Radialbund 48. Dieser dient als Sitzventilkörper 48, insbesondere als Tellersitzventilkörper. Diesem ist ein Ventilsitz 50 zugeordnet. Liegt der Radialbund 48 auf dem Ventilsitz 50 an, so ist der Vorsteueranschluss 30 zum Ablaufanschluss 40 hin gesperrt. Der Vorsteuerkolben 44 hat einen sich von dem Radialbund 48 und vom Vorsteuerteil 46 weg erstreckenden Kolbenabschnitt 52. Über diesen ist der Vorsteuerkolben 44 von einer Aktorkraft eines Aktors in Form eines Proportionalmagneten 54 beaufschlagbar. Dieser weist eine Feder 56 auf, über die der Vorsteuerkolben 44 und somit der Radialbund 48 in Richtung des Ventilsitzes 50 mit einer Federkraft beaufschlagt ist. Die Feder 56 beaufschlagt hierzu einen Anker 58 des Proportionalmagneten 54, der wiederum an einer Stirnfläche des Vorsteuerkolbens 44 anliegt. Der Anker 58 ist von einer Spulenanordung 60 umgriffen. Wird diese bestromt, so wird der Anker 58 in Richtung der Federkraft der Feder 56 mit einer Magnetkraft beaufschlagt. Bei steigender Bestromung der Spulenanordung 60 steigt somit die auf den Vorsteuerkolben 44 wirkende Aktorkraft.

Ausgehend vom Radialbund 48 in entgegengesetzter Richtung zum Kolbenabschnitt 52 erstreckt sich ein weiterer Kolbenabschnitt 62. Dieser ist mit seiner Stirnfläche an dem zweiten Vorsteuerteil 46, das in Form eines Kugelventilkörpers ausgebildet ist, anliegbar. Dem Kugelventilkörper 46 ist ebenfalls ein Ventilsitz zugeordnet. Liegt der Kugelventilkörper 46 am Ventilsitz an, so ist eine Druckmittelverbindung zwischen dem Steuerölanschluss 34 und dem Vorsteueranschluss 30 geschlossen. Liegt der Vorsteuerkolben 44 am Kugelventilkörper 46 an und wird in einer Richtung weg vom Proportionalmagneten 54 bewegt, so entfernt sich der Kugelventilkörper 46 von seinem Ventilsitz.

Gemäß Fig. 1 sind die Vorsteuerteile 44, 46 im Druckregelbetrieb gezeigt. In diesem sind sowohl der Radialbund 48 als auch der Kugelventilkörper 46 von ihrem Ventilsitz abgehoben. Somit ist sowohl die Druckmittelverbindung zwischen dem Steuerölanschluss 38 und dem Vorsteueranschluss 30 als auch zwischen dem Vorsteueranschluss 30 und dem Ablaufanschluss 40 geöffnet, wodurch Schwingungsanregungen des Vorsteuerventils 32 und des Hauptventils 6 verringert oder vermieden sind. Mit dem Vorsteuerventil 32 kann ein Vorsteuerdruck, der auf der Stirnfläche 28 des Steuerkolbens 8 anliegt, konstant gehalten werden. Der Vorsteuerdruck wird hierbei durch die Bestromung des Proportionalmagneten 54 eingestellt.

Im unbestromten Zustand des Proportionalmagneten 54 wird das Vorsteuerteil 44 durch die Federkraft der Feder 56 weg vom Proportionalmagneten 54 verschoben, falls die auf das Vorsteuerteil 46 entgegen der Federkraft wirkende Kräfte geringer sind. In diesem Fall liegt der Radialbund 48 auf dem Ventilsitz 50 an. Übersteigen die auf das Vorsteuerteil 46 im unbestromten Zustand des Proportionalmagneten 54 entgegen der Federkraft wirkenden Kräfte über die Federkraft, so wird das Vorsteuerteil 46 auf seinen Ventilsitz verschoben und verschließt den entsprechenden Öffnungsquerschnitt. Somit kann außerhalb des Druckregelbetriebs kein Steueröl vom Steuerölanschluss 34 zum Ablaufanschluss 40 strömen, da einer der Öffnungsquerschnitte geschlossen ist. Dies führt weiter dazu, dass die Steuerölverluste des Vorsteuerventils 32 und somit des gesamten Druckreduzierventils 1 äußerst gering sind.

Der Vorsteueranschluss 30 des Vorsteuerventils 32 ist gemäß Fig.1 mit einem von der Stirnfläche 28 des Steuerkolbens 8 begrenzten Druckraum 64 der Kolbenbohrung 10 verbunden.

Gemäß Fig. 1 ist das Hauptventil 6 koaxial zum Vorsteuerventil 32 angeordnet.

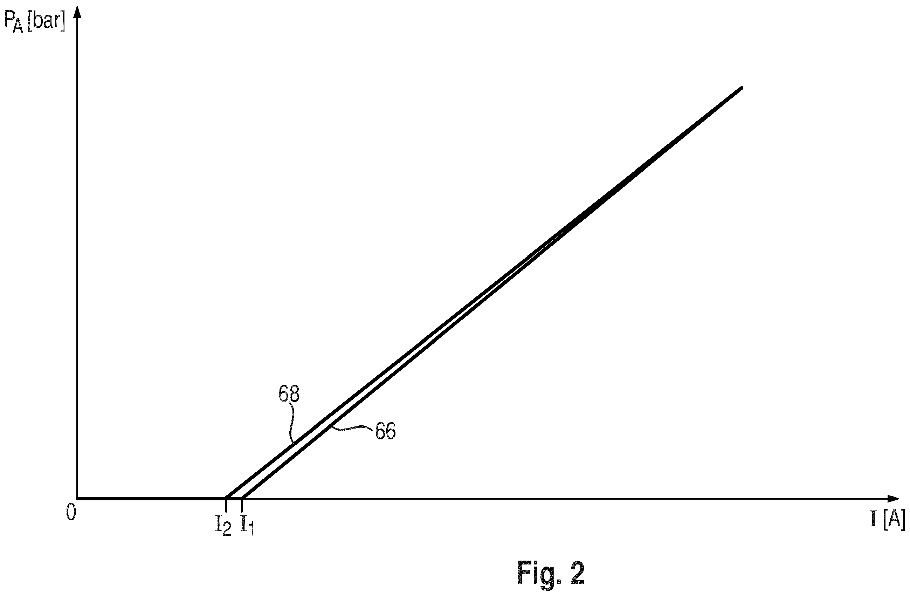

Gemäß Fig. 2 ist eine Strom-Ausgangsdruck-Kennlinie des Druckreduzierventils 1 dargestellt. Wird der Proportionalmagnet 54 aus Fig. 1 eingeschaltet und bestromt, so steigt der Ausgangsdruck p_{A} im Ausgangsanschluss A des Hauptventils 6 erst ab einen Strom I₁ an, siehe Kennlinie 66 in Fig. 2. Dies folgt daraus, dass die Federkraft der Feder 22 überwunden werden muss, damit der Steuerkolben 8 in seine Regelstellungen durch den Vorsteuerdruck verschiebbar ist. Der eingeregelte Ausgangsdruck p_{A} ist ab dem Strom I₁ etwa proportional zum Strom I des Proportionalmagneten 54. Wird die Bestromung des Proportionalmagneten gesenkt, so ist der Ausgangsdruck p_{A} proportional zum Strom I entsprechend einer Kennlinie 68, siehe Fig. 2, die sich aufgrund einer Hysterese ergibt. Ab einen Strom I₂ bei einer Senkung des Stroms ist der Ausgangsdruck p_{A} Null, wobei I₂ kleiner als I₁ ist.

Offenbart ist ein Druckreduzierventil mit einem Hauptventil und einem Vorsteuerventil. Dieses regelt in Abhängigkeit eines über das Vorsteuerventil geregelten Vorsteuerdrucks einen Öffnungsquerschnitt zwischen einem Steuerölanschluss und einem Ausgangsanschluss und zwischen dem Ausgangsanschluss und einem Tankanschluss. Das Vorsteuerventil hält im Druckregelbetrieb den eingestellten Vorsteuerdruck konstant. Das Vorsteuerventil hat zumindest ein Vorsteuerteil, mit dem ein erster Öffnungsquerschnitt zwischen einem Steuerölanschluss und einem mit dem Hauptventil fluidisch verbundenen Vorsteueranschluss steuerbar ist. Des Weiteren ist mit dem zumindest einen Vorsteuerteil ein zweiter Öffnungsquerschnitt zwischen dem Vorsteueranschluss und einem Ablaufanschluss steuerbar. In einem Druckregelbetrieb zum Regeln des Vorsteuerdrucks sind beide Öffnungsquerschnitte geöffnet.

### Bezugszeichenliste

- 1: Druckreduzierventil
- 2: Hauptstufe
- 4: Vorstufe
- 6: Hauptventil
- 8: Steuerkolben
- P: Steuerölanschluss
- A: Ausgangsanschluss
- T: Tankanschluss
- 10: Kolbenbohrung
- 12: Ringnut
- 14: Radialbund
- 16: Radialbund
- 18: Steuerkante
- 20: Steuerkante
- 21: Stirnfläche
- 22: Feder
- 24: Steuerkanal
- 26: Federraum
- 28: Stirnfläche
- 30: Vorsteueranschlusses
- 32: Vorsteuerventil
- 34: Steuerölanschluss
- 36: Verbindungsströmungspfad
- 38: Hydropumpe
- 40: Ablaufanschluss
- 42: Tank
- 44: Vorsteuerteil
- 46: Vorsteuerteil
- 48: Radialbund
- 50: Ventilsitz
- 52: Kolbenabschnitt
- 54: Proportionalmagnet
- 56: Feder
- 58: Anker
- 60: Spulenanordnung
- 62: Kolbenabschnitt
- 64: Druckraum
- 66: Kennlinie
- 68: Kennlinie

## Patentansprüche

1. Druckreduzierventil mit einem Hauptventil (6), das ein Steuerteil (8) aufweist, das in Abhängigkeit eines über ein Vorsteuerventil (32) geregelten Vorsteuerdrucks einen Öffnungsquerschnitt zwischen einem Steuerölanschluss (P) und einem Ausgangsanschluss (A) steuert, wobei das Vorsteuerventil (32) zumindest ein Vorsteuerteil (44, 46) aufweist, um in einem Druckregelbetrieb den eingestellten Vorsteuerdruck konstant zu halten, **dadurch gekennzeichnet, dass** mit dem zumindest einen Vorsteuerteil (44, 46) ein erster Öffnungsquerschnitt zwischen einem Steuerölanschluss (34) und einem mit dem Hauptventil (6) fluidisch verbundenen Vorsteueranschluss (30) steuerbar ist und ein zweiter Öffnungsquerschnitt zwischen dem Vorsteueranschluss (30) und einem Ablaufanschluss (40) steuerbar ist, wobei im Druckregelbetrieb beide Öffnungsquerschnitte geöffnet sind.

2. Druckreduzierventil nach Anspruch 1, wobei außerhalb des Druckregelbetriebs wenigstens ein Öffnungsquerschnitt geschlossen ist.

3. Druckreduzierventil nach Anspruch 1 oder 2, wobei über den Vorsteueranschluss (30) des Vorsteuerventils (32) Druckmittel auf das Steuerteil (8) des Hauptventils (6) beaufschlagbar ist.

4. Druckreduzierventil nach einem der Ansprüche 1 bis 3, wobei mit dem Steuerteil (8) des Hauptventils (6) wahlweise der Steuerölanschluss (P) mit dem Ausgangsanschluss (A) oder der Ausgangsanschluss (A) mit einem Tankanschluss (T) verbindbar ist.

5. Druckreduzierventil nach einem der vorhergehenden Ansprüche, wobei das Steuerteil (8) über einer erste Stirnfläche (21) von einer Federkraft einer Feder (22) und einem Druckmittel des Ausgangsanschlusses (A) beaufschlagt ist und über eine zweite Stirnfläche (28) vom Druckmittel des Vorsteueranschlusses (30) des Vorsteuerventils (32) beaufschlagt ist.

6. Druckreduzierventil nach Anspruch 5, wobei das Steuerteil (8) in einer mittleren Regelstellung den Ausgangsanschluss (A) von dem Druckanschluss (P) und von dem Tankanschluss (T) trennt, und wobei das Steuerteil (8) von der Federkraft der Feder (22) und dem Druckmittel des Ausgangsanschlusses (A) in Richtung von ersten Regelstellungen beaufschlagt ist, in denen es ausgehend von der mittleren Regelstellung einen Öffnungsquerschnitt zwischen dem Ausgangsanschluss (A) und dem Tankanschluss (T) über eine erste Steuerkante (20) aufsteuert, und wobei das Steuerteil (8) entgegengesetzt zur Federkraft vom Druckmittel des Vorsteueranschlusses (30) des Vorsteuerventils (32) in Richtung von zweiten Regelstellungen beaufschlagt ist, in denen es ausgehend von der mittleren Regelstellung einen Öffnungsquerschnitt zwischen dem Ausgangsanschluss (A) und dem Druckanschluss (P) über eine zweite Steuerkante (18) aufsteuert.

7. Druckreduzierventil nach einem der Ansprüche 4 bis 6, wobei das Steuerteil ein Steuerkolben (8) ist, der in einer Schieberbohrung (10) verschiebbar angeordnet ist und einen ersten Steuerbund (14) hat, der mit dem in der Schieberbohrung (10) mündenden Steueranschluss (P) eine erste Blende bildet und einen zweiten Steuerbund (16) hat, der mit dem in der Schieberbohrung (10) mündenden Tankanschluss (T) eine zweite Blende bildet.

8. Druckreduzierventil nach einem der vorhergehenden Ansprüche, wobei das Vorsteuerventil (32) zwei Vorsteuerteile (44, 46) hat, wobei das erste Vorsteuerteil als Vorsteuerkolben (44) mit einem Radialbund (48) ausgebildet ist, über den der zweite Öffnungsquerschnitt steuerbar ist, und wobei mit dem Vorsteuerkolben (44) ein Sitzventilkörper (46) als zweites Vorsteuerteil betätigbar ist, über den der erste Öffnungsquerschnitt steuerbar ist.

9. Druckreduzierventil nach Anspruch 8, wobei der Vorsteuerkolben (44) in Richtung des Sitzventilkörpers (46) von einer Aktorkraft eines Aktors (54) zum Einstellen des Vorsteuerdrucks beaufschlagbar ist, wobei bei einer Verschiebung des Vorsteuerkolbens (44) in diese Richtung der zweite Öffnungsquerschnitt verkleinert ist und der erste Öffnungsquerschnitt vergrößert ist.

10. Druckreduzierventil nach Anspruch 8 oder 9, wobei der Radialbund (48) des Vorsteuerkolbens (44) als Sitzventilkörper ausgebildet ist, der in einer Grundstellung des Vorsteuerkolbens (44) auf einem Ventilsitz (50) anliegt und den zweiten Öffnungsquerschnitt verschließt.

11. Druckreduzierventil nach Anspruche 9 oder 10, wobei der Vorsteuerkolben (44) über eine vom zweiten Vorsteuerteil (46) weg weisende Funktionsfläche von der Aktorkraft beaufschlagbar ist, und wobei der Vorsteuerkolben (44) über eine zum zweiten Vorsteuerteil (46) weisende Funktionsfläche an diesem zum Verschieben angreift.

12. Druckreduzierventil nach einem der Ansprüche 9 bis 11, wobei der Sitzventilkörper ein Kugelventilkörper (46) ist, der entgegen der Aktorkraft vom Steueröl beaufschlagbar ist, und der ab einem bestimmten Verschiebeweg des Vorsteuerkolbens (44) in eine Richtung weg vom Kugelventilkörper (46) auf einem Ventilsitz anliegt und den ersten Öffnungsquerschnitt verschließt.

13. Druckreduzierventil nach einem der Ansprüche 9 bis 12, wobei das erste Vorsteuerteil (44) in Richtung der Aktorkraft zusätzlich von einer Federkraft einer Feder beaufschlagt ist.

14. Druckreduzierventil nach Anspruch 12, wobei im unbestromten Zustand des Aktors das erste Vorsteuerteil (44) mit dem Radialbund (48) durch die Federkraft der Feder (56) auf seinem Ventilsitz (50) anliegt und den zweiten Öffnungsquerschnitt verschließt, oder falls die an den Kugelventilkörper (46) angreifenden Kräfte, die entgegengesetzt zur Federkraft wirken, größer als die Federkraft sind, der Kugelventilkörper (46) an seinem Ventilsitz anliegt und den ersten Öffnungsquerschnitt verschließt.

## Claims

1. Pressure reducing valve with a main valve (6), which has a control part (8) which, in dependence upon a pilot pressure which is regulated via a pilot valve (32), controls an opening cross section between a control-oil port (P) and an outlet port (A), wherein the pilot valve (32) has at least one pilot part (44, 46) in order to keep the adjusted pilot pressure constant during a pressure control operation, **characterized in that** by means of the at least one pilot part (44, 46) a first opening cross section between a control-oil port (34) and a pilot port (30) which is fluidically connected to the main valve (6) can be controlled, and a second opening cross section between the pilot port (30) and a drain port (40) can be controlled, wherein during the pressure control operation both opening cross sections are opened.

2. Pressure reducing valve according to Claim 1, wherein outside of the pressure control operation at least one opening cross section is closed.

3. Pressure reducing valve according to Claim 1 or 2, wherein via the pilot port (30) of the pilot valve (32) pressure medium can be applied to the control part (8) of the main valve (6).

4. Pressure reducing valve according to one of Claims 1 to 3, wherein by means of the control part (8) of the main valve (6) the control-oil port (P) can be selectively connected to the output port (A) or the output port (A) can be connected to a tank port (T).

5. Pressure reducing valve according to one of the preceding claims, wherein the control part (8), via a first end face (21), is acted upon by a force of a spring (22) and a pressure medium of the output port (A), and via a second end face (28) is acted upon by the pressure medium of the pilot port (30) of the pilot valve (32).

6. Pressure reducing valve according to Claim 5, wherein the control part (8) in a centre control position isolates the output port (A) from the pressure port (P) and from the tank port (T), and wherein the control part (8) is acted upon by the force of the spring (22) and the pressure medium of the output port (A) in the direction of first control positions in which starting from the centre control position it meters an opening cross section between the output port (A) and the tank port (T) via a first metering edge (20), and wherein the control part (8) is acted upon in opposition to the spring force by the pressure medium of the pilot port (30) of the pilot valve (32) in the direction of second control positions in which starting from the centre control position it meters an opening cross section between the output port (A) and the pressure port (P) via a second metering edge (18).

7. Pressure reducing valve according to one of Claims 4 to 6, wherein the control part is a control spool (8) which is displaceably arranged in a slide bore (10) and has a first metering land (14) which together with the control port (P) which opens into the slide bore (10) forms a first restrictor, and has a second metering land (16) which together with the tank port (T) which opens into the slide bore (10) forms a second restrictor.

8. Pressure reducing valve according to one of the preceding claims, wherein the pilot valve (32) has two pilot parts (44, 46), wherein the first pilot part is designed as a pilot spool (44) with a radial land (48) via which the second opening cross section can be controlled, and wherein by means of the pilot spool (44) a seating valve body (46) can be operated as a second pilot part via which the first opening cross section can be controlled.

9. Pressure reducing valve according to Claim 8, wherein the pilot spool (44) can be acted upon by a force of an actuator (54) in the direction of the seating valve body (46) for adjusting the pilot pressure, wherein with a displacement of the pilot spool (44) in this direction the second opening cross section is made smaller and the first opening cross section is made larger.

10. Pressure reducing valve according to Claim 8 or 9, wherein the radial land (48) of the pilot spool (44) is designed as a seating valve body which in an initial position of the pilot spool (44) is in contact with a valve seat (50) and closes the second opening cross section.

11. Pressure reducing valve according to Claim 9 or 10, wherein the pilot spool (44), via a functional face pointing away from the second pilot part (46), can be acted upon by the actuator force, and wherein the pilot spool (44), via a functional face pointing towards the second pilot part (46), acts on this for displacement purposes.

12. Pressure reducing valve according to one of Claims 9 to 11, wherein the seating valve body is a ball valve body (46) which can be acted upon by control oil in opposition to the actuator force, and which after a determined displacement distance of the pilot spool (44) in a direction away from the ball valve body (46) makes contact with a valve seat and closes the first opening cross section.

13. Pressure reducing valve according to one of Claims 9 to 12, wherein the first pilot part (44) is additionally acted upon by a force of a spring in the direction of the actuator force.

14. Pressure reducing valve according to Claim 12, wherein in the de-energized state of the actuator the first pilot part (44) by means of the radial land (48) is in contact with its valve seat (50) by the force of the spring (56) and closes the second opening cross section, or, if the forces acting on the ball valve body (46), which act in opposition to the spring force, are greater than the spring force, the ball valve body (46) makes contact with its valve seat and closes the first opening cross section.

## Revendications

1. Soupape de réduction de pression comprenant une soupape principale (6) qui présente une partie de commande (8) qui commande une section transversale d'ouverture entre un raccord d'huile de commande (P) et un raccord de sortie (A) en fonction d'une pression pilote régulée par une soupape pilote (32), la soupape pilote (32) présentant au moins une partie pilote (44, 46) afin de maintenir constante la pression pilote ajustée pendant un mode de fonctionnement de réglage de pression, **caractérisée en ce qu'**au moyen de l'au moins une partie pilote (44, 46), une première section transversale d'ouverture entre un raccord d'huile de commande (34) et un raccord pilote (30) connecté fluidiquement à la soupape principale (6) peut être commandée et une deuxième section transversale d'ouverture entre le raccord pilote (30) et un raccord d'évacuation (40) peut être commandée, les deux sections transversales d'ouverture étant ouvertes pendant le mode de fonctionnement de réglage de pression.

2. Soupape de réduction de pression selon la revendication 1, dans laquelle au moins une section transversale d'ouverture est fermée en dehors du mode de fonctionnement de réglage de pression.

3. Soupape de réduction de pression selon la revendication 1 ou 2, dans laquelle la partie de commande (8) de la soupape principale (6) peut être sollicitée par un fluide sous pression par le biais du raccord pilote (30) de la soupape pilote (32) .

4. Soupape de réduction de pression selon l'une quelconque des revendications 1 à 3, dans laquelle, de manière sélective, le raccord d'huile de commande (P) peut être connecté au raccord de sortie (A) ou le raccord de sortie (A) peut être connecté à un raccord de réservoir (T) par la partie de commande (8) de la soupape principale (6) .

5. Soupape de réduction de pression selon l'une quelconque des revendications précédentes, dans laquelle la partie de commande (8) est sollicitée par le biais d'une première surface frontale (21) par une force de ressort d'un ressort (22) et par un fluide sous pression du raccord de sortie (A) et est sollicitée par le biais d'une deuxième surface frontale (28) par le fluide sous pression du raccord pilote (30) de la soupape pilote (32).

6. Soupape de réduction de pression selon la revendication 5, dans laquelle la partie de commande (8), dans une position de réglage centrale, sépare le raccord de sortie (A) du raccord de pression (P) et du raccord de réservoir (T), et dans laquelle la partie de commande (8) est sollicitée par la force de ressort du ressort (22) et par le fluide sous pression du raccord de sortie (A) dans la direction de premières positions de réglage dans lesquelles elle commande, à partir de la position de réglage centrale, une section transversale d'ouverture entre le raccord de sortie (A) et le raccord de réservoir (T) par le biais d'une première arête de commande (20), et la partie de commande (8) étant sollicitée dans le sens opposé à la force de ressort par le fluide sous pression du raccord pilote (30) de la soupape pilote (32) dans la direction de deuxièmes positions de réglage dans lesquelles elle commande, à partir de la position de réglage centrale, une section transversale d'ouverture entre le raccord de sortie (A) et le raccord de pression (P) par le biais d'une deuxième arête de commande (18).

7. Soupape de réduction de pression selon l'une quelconque des revendications 4 à 6, dans laquelle la partie de commande est un piston de commande (8) qui est disposé de manière déplaçable dans un alésage de coulisseau (10) et présente un premier épaulement de commande (14) qui, avec le raccord de commande (P) débouchant dans l'alésage de coulisseau (10), forme un premier diaphragme et qui présente un deuxième épaulement de commande (16) qui, avec le raccord de réservoir (T) débouchant dans l'alésage de coulisseau (10), forme un deuxième diaphragme.

8. Soupape de réduction de pression selon l'une quelconque des revendications précédentes, dans laquelle la soupape pilote (32) présente deux parties pilotes (44, 46), la première partie pilote étant réalisée sous forme de piston pilote (44) avec un épaulement radial (48), par le biais duquel la deuxième section transversale d'ouverture peut être commandée, et avec le piston pilote (44), un corps de soupape à siège (46) pouvant être commandé en tant que deuxième partie pilote, par le biais duquel la première section transversale d'ouverture peut être commandée.

9. Soupape de réduction de pression selon la revendication 8, dans laquelle le piston pilote (44) peut être sollicité dans la direction du corps de soupape à siège (46) par une force d'actionneur d'un actionneur (54) pour l'ajustement de la pression pilote, la deuxième section transversale d'ouverture étant réduite et la première section transversale d'ouverture étant augmentée dans le cas d'un déplacement du piston pilote (44) dans cette direction.

10. Soupape de réduction de pression selon la revendication 8 ou 9, dans laquelle l'épaulement radial (48) du piston pilote (44) est réalisé sous forme de corps de soupape à siège qui s'applique dans une position de base du piston pilote (44) sur un siège de soupape (50) et qui ferme la deuxième section transversale d'ouverture.

11. Soupape de réduction de pression selon la revendication 9 ou 10, dans laquelle le piston pilote (44) peut être sollicité par la force d'actionneur par le biais d'une surface fonctionnelle opposée à la deuxième partie pilote (46), et le piston pilote (44) s'engage, par le biais d'une surface fonctionnelle tournée vers la deuxième partie pilote (46), avec cette dernière en vue de son déplacement.

12. Soupape de réduction de pression selon l'une quelconque des revendications 9 à 11, dans laquelle le corps de soupape à siège est un corps de soupape à bille (46) qui peut être sollicité dans le sens opposé à la force d'actionneur par de l'huile de commande et qui, à partir d'une course de déplacement déterminée du piston pilote (44) dans une direction s'écartant du corps de soupape à bille (46), s'applique contre un siège de soupape et ferme la première section transversale d'ouverture.

13. Soupape de réduction de pression selon l'une quelconque des revendications 9 à 12, dans laquelle la première partie pilote (44) est sollicitée en outre par une force de ressort d'un ressort dans la direction de la force d'actionneur.

14. Soupape de réduction de pression selon la revendication 12, dans laquelle, dans l'état non alimenté en courant de l'actionneur, la première partie pilote (44) s'applique avec l'épaulement radial (48) sous l'effet de la force de ressort du ressort (56) sur son siège de soupape (50) et ferme la deuxième section transversale d'ouverture, ou, au cas où les forces agissant sur le corps de soupape à bille (46), qui agissent dans le sens opposé à la force de ressort, sont supérieures à la force de ressort, le corps de soupape à bille (46) s'applique sur son siège de soupape et ferme la première section transversale d'ouverture.
